# EUROPÄISCHE PATENTSCHRIFT

(11) **EP 3 991 291 B1**
(45) Veröffentlichungstag und Bekanntmachung des Hinweises auf die Patenterteilung: **18.12.2024**
(21) Anmeldenummer: 20754618.5
(22) Anmeldetag: 22.07.2020
(51) Int. Cl.: H02P 27/08, H01H 3/26, H02M 3/156, H02M 1/00, H01H 3/30

(54) **ERZEUGEN EINER MOTORSPANNUNG FÜR EINEN SCHALTERANTRIEB**
PRODUCING A MOTOR VOLTAGE FOR A SWITCH DRIVE
PRODUCTION D'UNE TENSION DE MOTEUR POUR UNE COMMANDE DE COMMUTATEUR

(30) Priorität: 21.08.2019 DE 102019212519
(43) Veröffentlichungstag der Anmeldung: 04.05.2022
(73) Patentinhaber: Siemens Energy Global GmbH & Co. KG, 81739 München (DE)
(72) Erfinder: HILKER, Thomas, 14532 Stahnsdorf (DE); BRUMMUND, David, 06114 Halle / Saale (DE)
(86) Internationale Anmeldenummer: PCT/EP2020/070611
(87) Internationale Veröffentlichungsnummer: WO 2021/032391

(56) Entgegenhaltungen:
- KR-B1- 101 969 019
- US-A1- 2019 237 274
- US-B1- 9 450 492

## Beschreibung

Die Erfindung betrifft ein Verfahren und einen Stromrichter zum Erzeugen einer Motorspannung für einen Elektromotor eines Schalterantriebs eines elektrischen Schalters.

Elektrische Schalter wie Leistungsschalter oder Trennschalter weisen in der Regel wenigstens ein bewegbares Schaltelement zum Unterbrechen und Schließen eines Strompfads auf. Zum Bewegen des Schaltelements wird mechanische Energie benötigt, die häufig von einem Elektromotor, wie z. B. aus der US 2019/237274 A1 bekannt, bereitgestellt wird, der das Schaltelement direkt oder über ein Getriebe antreibt oder eine Energiespeichereinrichtung auflädt. Als Energiespeichereinrichtung wird beispielsweise ein Federspeicher mit einer von dem Elektromotor spannbaren Feder verwendet. Durch normative Vorgaben und Kundenanforderungen sind die elektrischen Versorgungsspannungen, die den Elektromotoren zur Verfügung stehen, sehr vielfältig und unterscheiden sich neben der Spannungshöhe auch in der Spannungsform (Gleichspannung, ein- oder mehrphasige Wechselspannung). Um einen Elektromotor an verschiedenen Versorgungsspannungen betreiben zu können, wird beispielsweise ein Stromrichter eingesetzt, mit dem aus der jeweiligen Versorgungsspannung eine Motorspannung für den Elektromotor erzeugbar ist. Ein derartiger Stromrichter wandelt beispielsweise eine Versorgungsspannung zunächst in eine Zwischenkreisgleichspannung um und erzeugt die Motorspannung durch eine Pulsweitenmodulation der Zwischenkreisgleichspannung.

Aus Dokument US 9 450 492 B1 ist bekannt, in einem Schaltnetzteil die zeitliche Veränderung der Eingangsspannung mit vorgegebenen Schwellenwerten zu vergleichen. Überschreitet die Differenz die Schwellenwerte, aktualisiert ein Speicherelement seinen gespeicherten Wert mit dem neuesten Wert des Versorgungsspannungseingangs. Ein Akkumulator wird mit einem Wert ungleich Null aktualisiert, wenn die Differenzmessung die Schwellenwerte überschreitet, wodurch ein Korrekturfaktor zeitlich begrenzt auf einen Integrator im Regelkreis des PWM-Reglers angewendet wird.

Der Erfindung liegt die Aufgabe zugrunde, ein verbessertes Verfahren und einen verbesserten Stromrichter zum Erzeugen einer Motorspannung für einen Elektromotor eines Schalterantriebs eines elektrischen Schalters anzugeben, um die Motorspannung flexibel aus verschiedenen und sich ändernden Versorgungsspannungen erzeugen zu können.

Die Aufgabe wird erfindungsgemäß durch ein Verfahren mit den Merkmalen des Anspruchs 1, einen Stromrichter mit den Merkmalen des Anspruchs 9, einen elektrischen Schalter mit den Merkmalen des Anspruchs 13 und ein Computerprogramm mit den Merkmalen des Anspruchs 15 gelöst.

Vorteilhafte Ausgestaltungen der Erfindung sind Gegenstand der Unteransprüche.

Bei dem erfindungsgemäßen Verfahren zum Erzeugen einer Motorspannung für einen Elektromotor eines Schalterantriebs eines elektrischen Schalters wird aus einer Versorgungsspannung eine Zwischenkreisgleichspannung erzeugt und die Motorspannung wird durch eine Pulsweitenmodulation der Zwischenkreisgleichspannung erzeugt. Dabei wird ein Toleranzbereich für eine Änderung der Zwischenkreisgleichspannung vorgegeben und es wird fortlaufend ein Istwert der Zwischenkreisgleichspannung gemessen. Nach der ersten Messung des Istwerts wird der Istwert in einer Spannungsvariablen gespeichert. Nach jeder weiteren Messung des Istwerts wird geprüft, ob eine Abweichung des Istwerts von dem in der Spannungsvariablen gespeicherten Wert innerhalb des Toleranzbereichs liegt, und der Istwert wird in der Spannungsvariablen gespeichert, wenn die Abweichung des Istwerts von dem in der Spannungsvariablen gespeicherten Wert außerhalb des Toleranzbereichs liegt. Nach jeder Speicherung eines Istwerts in der Spannungsvariablen wird ein von diesem Istwert abhängiger Tastgrad der Pulsweitenmodulation berechnet und die Pulsweitenmodulation wird mit diesem Tastgrad durchgeführt.

Bei dem erfindungsgemäßen Verfahren wird die Motorspannung also durch eine Pulsweitenmodulation einer Zwischenkreisgleichspannung erzeugt, die aus einer Versorgungsspannung erzeugt wird. Dabei wird der Tastgrad der Pulsweitenmodulation der jeweiligen Versorgungsspannung angepasst, um die Motorspannung aus verschiedenen und sich ändernden Versorgungsspannungen erzeugen zu können. Eine Neuberechnung des Tastgrads erfordert jedoch eine relativ hohe Rechenleistung. Die Erfindung sieht daher vor, den Tastgrad nur bei einer wesentlichen Änderung der Zwischenkreisgleichspannung neu zu berechnen. Dazu wird ein Toleranzbereich für die Änderung der Zwischenkreisgleichspannung vorgegeben und es wird eine Spannungsvariable verwendet, in der ein gemessener Wert der Zwischenkreisgleichspannung gespeichert wird. Der Tastgrad wird nur dann neu berechnet, wenn eine Abweichung eines aktuellen Istwerts der Zwischenkreisgleichspannung von dem in der Spannungsvariablen gespeicherten Wert außerhalb des Toleranzbereichs liegt. Bei jeder Neuberechnung des Tastgrads wird ferner der Wert der Spannungsvariablen auf den aktuellen Istwert der Zwischenkreisgleichspannung aktualisiert. Dadurch werden Neuberechnungen des Tastgrads bei nur geringen Änderungen der Versorgungsspannung vermieden und somit werden vorteilhaft Zeit und Rechenleistung für Neuberechnungen des Tastgrads eingespart.

Der Toleranzbereich kann symmetrisch oder asymmetrisch um den in der Spannungsvariablen gespeicherten Wert vorgegeben werden. Ferner können die Grenzen des Toleranzbereichs durch Absolutwerte oder Relativwerte der Abweichung des Istwerts von dem in der Spannungsvariablen gespeicherten Wert vorgegeben werden.

Bei einer Ausgestaltung der Erfindung wird eine Berechnungsanzahl von Berechnungen des Tastgrades erfasst. Mit anderen Worten werden die (Neu-) Berechnungen des Tastgrads gezählt. Dadurch kann vorteilhaft analysiert werden, ob der Toleranzbereich sinnvoll gewählt ist, und der Toleranzbereich kann erforderlichenfalls angepasst werden. Ferner können Instabilitäten einer Versorgungsspannung und/oder des Schalterantriebs erkannt werden, die zu häufigen starken Schwankungen der Zwischenkreisgleichspannung führen.

Beispielsweise kann vorgesehen werden, dass ein Schwellenwert für die Berechnungsanzahl vorgegeben wird, die Berechnungsanzahl mit dem Schwellenwert verglichen wird und ein Warnsignal erzeugt wird, wenn die Berechnungsanzahl den Schwellenwert erreicht oder übertrifft. Zusätzlich oder alternativ kann vorgesehen sein, dass die Berechnungsanzahl auf einer Anzeigeeinheit angezeigt wird.

Ein erfindungsgemäßer Stromrichter zum Erzeugen einer Motorspannung für einen Elektromotor eines Antriebs eines elektrischen Schalters umfasst zwei Stromrichtereinheiten, eine Messeinheit und eine Steuereinheit. Eine erste Stromrichtereinheit ist eingerichtet, aus einer Versorgungsspannung eine Zwischenkreisgleichspannung zu erzeugen. Die Messeinheit ist eingerichtet, fortlaufend einen Istwert der Zwischenkreisgleichspannung zu messen. Die zweite Stromrichtereinheit ist eingerichtet, die Motorspannung durch eine Pulsweitenmodulation der Zwischenkreisgleichspannung zu erzeugen. Die Steuereinheit ist eingerichtet, einen vorgebbaren Toleranzbereich für eine Änderung der Zwischenkreisgleichspannung zu speichern, nach der ersten Messung des Istwerts den Istwert in einer Spannungsvariablen zu speichern, nach jeder weiteren Messung des Istwerts zu prüfen, ob eine Abweichung des Istwerts von dem in der Spannungsvariablen gespeicherten Wert innerhalb des Toleranzbereichs liegt, und den Istwert in der Spannungsvariablen zu speichern, wenn die Abweichung des Istwerts von dem in der Spannungsvariablen gespeicherten Wert außerhalb des Toleranzbereichs liegt, und nach jeder Speicherung eines Istwerts in der Spannungsvariablen einen von diesem Istwert abhängigen Tastgrad der Pulsweitenmodulation zu berechnen und die Pulsweitenmodulation mit diesem Tastgrad zu steuern.

Bei einer Ausgestaltung eines erfindungsgemäßen Stromrichters ist die Steuereinheit eingerichtet, eine Berechnungsanzahl von Berechnungen des Tastgrades zu erfassen. Ferner kann die Steuereinheit eingerichtet sein, einen vorgebbaren Schwellenwert für die Berechnungsanzahl zu speichern, die Berechnungsanzahl mit dem Schwellenwert zu vergleichen und ein Warnsignal zu erzeugen, wenn die Berechnungsanzahl den Schwellenwert erreicht. Alternativ oder zusätzlich kann der Stromrichter eine Anzeigeeinheit aufweisen, die eingerichtet ist, die Berechnungsanzahl anzuzeigen.

Ein erfindungsgemäßer Stromrichter ermöglicht die Durchführung des erfindungsgemäßen Verfahrens. Die Vorteile eines derartigen Stromrichters entsprechen daher den oben genannten Vorteilen des erfindungsgemäßen Verfahrens.

Ein erfindungsgemäßer elektrischer Schalter umfasst einen Schalterantrieb mit einem Elektromotor und einen erfindungsgemäßen Stromrichter zum Erzeugen einer Motorspannung für den Elektromotor. Insbesondere kann der elektrische Schalter ein Leistungsschalter oder ein Trennschalter sein.

Ein erfindungsgemäßes Computerprogramm umfasst Befehle, die bei der Ausführung des Computerprogramms durch eine Steuereinheit diese veranlassen, das erfindungsgemäße Verfahren auszuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockschaltbild eines elektrischen Schalters,
- FIG 2: einen Schaltplan eines Stromrichters,
- FIG 3: ein Ablaufdiagramm eines Verfahrens zum Erzeugen einer Motorspannung.

Einander entsprechende Teile sind in den Figuren mit denselben Bezugszeichen versehen.

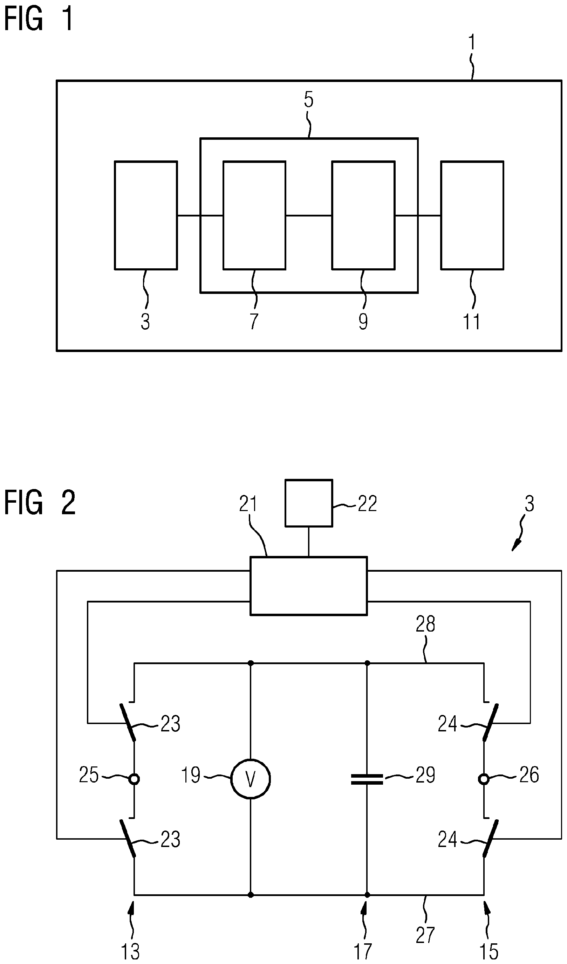

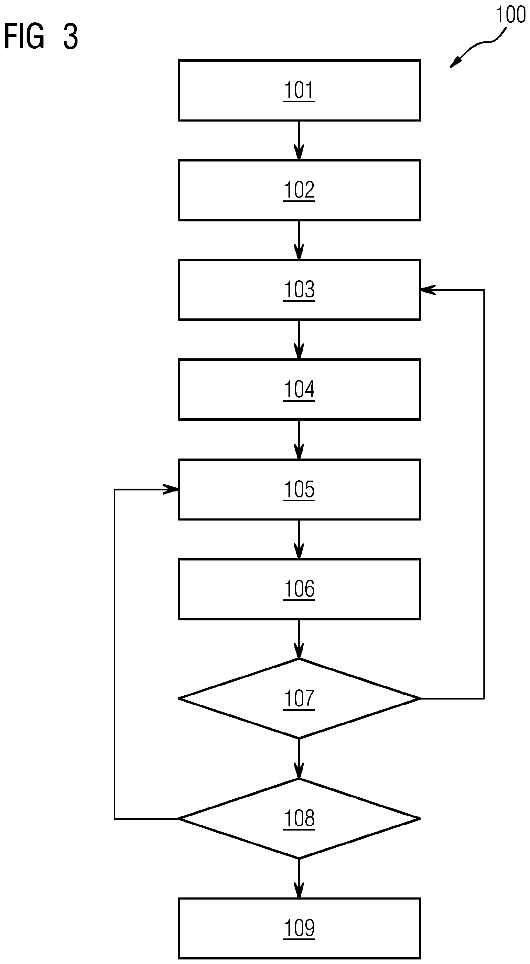

Figur 1 (FIG 1) zeigt ein Blockschaltbild eines Ausführungsbeispiels eines erfindungsgemäßen elektrischen Schalters 1, beispielsweise eines Leistungsschalters oder eines Trennschalters. Der Schalter 1 umfasst einen erfindungsgemäßen Stromrichter 3, einen Schalterantrieb 5 mit einem Elektromotor 7 und einer Energiespeichereinrichtung 9 und ein Schaltelement 11. Der Stromrichter 3 ist eingerichtet, in unten anhand von Figur 3 (FIG 3) näher beschriebener Weise aus einer Versorgungsspannung eine Motorspannung für den Elektromotor 7 zu erzeugen. Durch den Elektromotor 7 ist die Energiespeichereinrichtung 9 aufladbar. Beispielsweise ist die Energiespeichereinrichtung 9 ein Federspeicher mit einer durch den Elektromotor 7 spannbaren Feder. Durch in der Energiespeichereinrichtung 9 gespeicherte Energie ist das Schaltelement 11 bewegbar. Durch Bewegen des Schaltelements 11 ist ein Strompfad unterbrechbar und schließbar. Alternative Ausführungsbeispiele des Schalters 1 sehen beispielsweise statt einer Energiespeichereinrichtung 9 vor, dass das Schaltelement 11 durch den Elektromotor 7 direkt oder über ein Getriebe antreibbar ist.

Figur 2 (FIG 2) zeigt ein Ausführungsbeispiel eines erfindungsgemäßen Stromrichters 3. Der Stromrichter 3 weist zwei Stromrichtereinheiten 13, 15, einen Zwischenkreis 17, eine Messeinheit 19 und eine Steuereinheit 21 auf. Jede Stromrichtereinheit 13, 15 weist zwei in Reihe geschaltete Schalteinheiten 23, 24 auf, zwischen denen jeweils ein Stromrichteranschluss 25, 26 angeordnet ist. Die Schalteinheiten 23, 24 sind beispielsweise steuerbare Halbleiterschalter wie IGBT oder MOSFET. Alternativ sind die Schalteinheiten 23 der ersten Stromrichtereinheit 13 Dioden und die Schalteinheiten 24 der zweiten Stromrichtereinheit 15 steuerbare Halbleiterschalter wie IGBT oder MOSFET. Der Zwischenkreis 17 umfasst zwei Zwischenkreisleitungen 27, 28, die die beiden Stromrichtereinheiten 13, 15 miteinander verbinden, und einen Zwischenkreiskondensator 29, dessen Elektroden jeweils mit einer der Zwischenkreisleitungen 27, 28 verbunden sind. Die Messeinheit 19 ist eingerichtet, eine Zwischenkreisgleichspannung zwischen den Zwischenkreisleitungen 27, 28 zu messen. Mit der Steuereinheit 21 sind die steuerbaren Schalteinheiten 23, 24 ansteuerbar.

Im Betrieb des Stromrichters 3 wird eine Versorgungsspannung zwischen den Stromrichteranschluss 25 einer ersten Stromrichtereinheit 13 und eine der Zwischenkreisleitungen 27, 28 gelegt. Mit der ersten Stromrichtereinheit 13 wird die Zwischenkreisgleichspannung aus der Versorgungsspannung erzeugt. Die Versorgungsspannung kann eine einphasige Wechselspannung oder eine Gleichspannung sein. Wenn die Versorgungsspannung eine einphasige Wechselspannung ist, wird sie durch die erste Stromrichtereinheit 13 zu der Zwischenkreisgleichspannung gleichgerichtet. Wenn die Versorgungsspannung eine Gleichspannung ist, wird sie beispielsweise direkt als Zwischenkreisgleichspannung verwendet, wobei eine Schalteinheit 23 der ersten Stromrichtereinheit 13 ständig geöffnet und die andere Schalteinheit 23 der ersten Stromrichtereinheit 13 ständig geschlossen ist. Mit der zweiten Stromrichtereinheit 15 wird die Motorspannung für den Elektromotor 7 in unten näher beschriebener Weise durch eine Pulsweitenmodulation der Zwischenkreisgleichspannung erzeugt. Dazu wird eine Motorwicklung des Elektromotors 7 mit dem Stromrichteranschluss 26 der zweiten Stromrichtereinheit 15 verbunden.

Das in FIG 2 gezeigte Ausführungsbeispiel eines Stromrichters 3 ist zum Erzeugen einer einphasigen Motorspannung eingerichtet. Andere Ausführungsbeispiele können vorsehen, dass durch den Stromrichter 3 eine mehrphasige Motorspannung erzeugbar ist, wobei die zweite Stromrichtereinheit 15 für jede Phase der Motorspannung ein Paar von Schalteinheiten 24 und einen dazwischen angeordneten Stromrichteranschluss 26 aufweist. Zusätzlich oder alternativ können andere Ausführungsbeispiele vorsehen, dass die erste Stromrichtereinheit 13 für jede Phase einer mehrphasigen Versorgungsspannung ein Paar von Schalteinheiten 23 und einen dazwischen angeordneten Stromrichteranschluss 25 aufweist, um die Zwischenkreisgleichspannung aus einer mehrphasigen Versorgungsspannung zu erzeugen.

Figur 3 (FIG 3) zeigt ein Ablaufdiagramm 100 eines Ausführungsbeispiels eines erfindungsgemäßen Verfahrens zum Erzeugen einer vorgegebenen Motorspannung mit einem in FIG 1 gezeigten Stromrichter 1. Das Verfahren wird durch ein von der Steuereinheit 21 ausgeführtes Computerprogramm implementiert, das Istwerte der Zwischenkreisgleichspannung auswertet, die von der Messeinheit 19 gemessen werden.

In einem ersten Verfahrensschritt 101 wird ein Toleranzbereich für eine Änderung der Zwischenkreisgleichspannung vorgegeben. Der Toleranzbereich wird symmetrisch oder asymmetrisch um einen Wert vorgegeben, der während des Verfahrens in einer Spannungsvariablen gespeichert wird. Die Grenzen des Toleranzbereichs werden durch Absolutwerte oder Relativwerte der Abweichung des Istwerts von dem jeweils in der Spannungsvariablen gespeicherten Wert vorgegeben.

In einem zweiten Verfahrensschritt 102 wird der Stromrichter 3 aktiviert und erstmalig ein Istwert der Zwischenkreisgleichspannung gemessen.

In einem dritten Verfahrensschritt 103 wird der aktuelle Istwert der Zwischenkreisgleichspannung in der Spannungsvariablen gespeichert.

In einem vierten Verfahrensschritt 104 wird ein von dem in der Spannungsvariablen gespeicherten Wert abhängiger Tastgrad der Pulsweitenmodulation berechnet, um die Motorspannung durch eine Pulsweitenmodulation der Zwischenkreisgleichspannung zu erzeugen.

In einem fünften Verfahrensschritt 105 wird die Zwischenkreisgleichspannung mit dem in dem vierten Verfahrensschritt 104 berechneten Tastgrad pulsweitenmoduliert, wobei die Schalteinheiten 24 der zweiten Stromrichtereinheit 15 durch die Steuereinheit 21 entsprechend angesteuert werden.

In einem sechsten Verfahrensschritt 106 wird ein aktueller Istwert der Zwischenkreisgleichspannung gemessen.

In einem siebten Verfahrensschritt 107 wird geprüft, ob eine Abweichung des in dem sechsten Verfahrensschritt 106 gemessenen Istwerts von dem in der Spannungsvariablen gespeicherten Wert innerhalb des in dem ersten Verfahrensschritt 101 vorgegebenen Toleranzbereichs liegt. Wenn dies der Fall ist, wird das Verfahren mit einem achten Verfahrensschritt 108 fortgesetzt. Andernfalls wird das Verfahren mit dem dritten Verfahrensschritt 103 fortgesetzt.

In dem achten Verfahrensschritt 108 wird geprüft, ob die Energiespeichereinrichtung 9 vollständig aufgeladen ist. Wenn dies der Fall ist (das heißt, wenn die Energiespeichereinrichtung 9 vollständig aufgeladen ist), wird das Verfahren mit einem neunten Verfahrensschritt 109 fortgesetzt. Andernfalls wird das Verfahren mit dem fünften Verfahrensschritt 105 fortgesetzt.

In dem neunten Verfahrensschritt 109 wird der Elektromotor 7 abgeschaltet und das Verfahren beendet.

Optional kann vorgesehen sein, dass bei dem Verfahren die Berechnungen des Tastgrades gezählt werden. Ferner kann vorgesehen sein, dass die Berechnungsanzahl angezeigt wird und/oder ein Warnsignal erzeugt wird, wenn die Berechnungsanzahl einen vorgebbaren Schwellenwert erreicht oder übertrifft. Beispielsweise wird dazu in dem zweiten Verfahrensschritt 102 eine Zählvariable für die Berechnungsanzahl mit dem Wert Null initialisiert. Ferner kann vorgesehen sein, dass in dem ersten Verfahrensschritt 101 zusätzlich ein Schwellenwert für die Berechnungsanzahl vorgegeben wird. In dem vierten Verfahrensschritt 104 wird dann zusätzlich der in der Zählvariablen gespeicherte Wert um Eins inkrementiert. Der in der Zählvariablen momentan gespeicherte Wert wird beispielsweise auf einer Anzeigeeinheit 22 des Stromrichters 3 angezeigt. Wenn in dem ersten Verfahrensschritt 101 ein Schwellenwert für die Berechnungsanzahl vorgegeben wurde, kann in dem vierten Verfahrensschritt 104 ferner nach dem Inkrementieren des in der Zählvariablen gespeicherten Werts dieser Wert mit dem Schwellenwert verglichen werden und ein optisches und/oder akustisches Warnsignal ausgegeben werden, wenn der in der Zählvariablen gespeicherte Wert mit der Berechnungsanzahl übereinstimmt oder die Berechnungsanzahl übertrifft.

Wenn der Schalter 1 keine Energiespeichereinrichtung 9 aufweist, sondern das Schaltelement 11 direkt oder über ein Getriebe von dem Elektromotor 7 antreibbar ist, wird in dem achten Verfahrensschritt 108 geprüft, ob das Schaltelement 11 eine Schaltstellung erreicht hat, in die es durch den Elektromotor 7 zu bewegen ist. Wenn dies der Fall ist (das heißt, wenn das Schaltelement 11 die Schaltstellung erreicht hat), wird das Verfahren mit einem neunten Verfahrensschritt 109 fortgesetzt. Andernfalls wird das Verfahren mit dem fünften Verfahrensschritt 105 fortgesetzt. Die anderen Verfahrensschritte 101 bis 107 und 109 werden wie oben beschrieben ausgeführt.

Obwohl die Erfindung im Detail durch bevorzugte Ausführungsbeispiele näher illustriert und beschrieben wurde, so ist die Erfindung nicht durch die offenbarten Beispiele eingeschränkt. Der Schutzumfang der Erfindung wird durch die angehängten Ansprüche definiert.

## Patentansprüche

1. Verfahren zum Erzeugen einer Motorspannung für einen Elektromotor (7) eines Schalterantriebs (5) eines elektrischen Schalters (1), wobei
- aus einer Versorgungsspannung eine Zwischenkreisgleichspannung erzeugt wird und
- die Motorspannung durch eine Pulsweitenmodulation der Zwischenkreisgleichspannung erzeugt wird,
**gekennzeichnet dadurch dass**
- ein Toleranzbereich für eine Änderung der Zwischenkreisgleichspannung vorgegeben wird,
- fortlaufend ein Istwert der Zwischenkreisgleichspannung gemessen wird,
- nach der ersten Messung des Istwerts der Istwert in einer Spannungsvariablen gespeichert wird,
- nach jeder weiteren Messung des Istwerts geprüft wird, ob eine Abweichung des Istwerts von dem in der Spannungsvariablen gespeicherten Wert innerhalb des Toleranzbereichs liegt, und der Istwert in der Spannungsvariablen gespeichert wird, wenn die Abweichung des Istwerts von dem in der Spannungsvariablen gespeicherten Wert außerhalb des Toleranzbereichs liegt,
- und nach jeder Speicherung eines Istwerts in der Spannungsvariablen ein von diesem Istwert abhängiger Tastgrad der Pulsweitenmodulation berechnet wird und die Pulsweitenmodulation mit diesem Tastgrad durchgeführt wird.

2. Verfahren nach Anspruch 1, wobei der Toleranzbereich symmetrisch um den in der Spannungsvariablen gespeicherten Wert vorgegeben wird.

3. Verfahren nach Anspruch 1, wobei der Toleranzbereich asymmetrisch um den in der Spannungsvariablen gespeicherten Wert vorgegeben wird.

4. Verfahren nach einem der vorhergehenden Ansprüche, wobei die Grenzen des Toleranzbereichs durch Absolutwerte der Abweichung des Istwerts von dem in der Spannungsvariablen gespeicherten Wert vorgegeben werden.

5. Verfahren nach einem der Ansprüche 1 bis 4, wobei die Grenzen des Toleranzbereichs durch Relativwerte der Abweichung des Istwerts von dem in der Spannungsvariablen gespeicherten Wert vorgegeben werden.

6. Verfahren nach einem der vorhergehenden Ansprüche, wobei eine Berechnungsanzahl von Berechnungen des Tastgrades erfasst wird.

7. Verfahren nach Anspruch 6, wobei ein Schwellenwert für die Berechnungsanzahl vorgegeben wird, die Berechnungsanzahl mit dem Schwellenwert verglichen wird und ein Warnsignal erzeugt wird, wenn die Berechnungsanzahl den Schwellenwert erreicht oder übertrifft.

8. Verfahren nach Anspruch 6 oder 7, wobei die Berechnungsanzahl auf einer Anzeigeeinheit (22) angezeigt wird.

9. Stromrichter (3) zum Erzeugen einer Motorspannung für einen Elektromotor (7) eines Antriebs eines elektrischen Schalters (1), der Stromrichter (3) umfassend
- eine erste Stromrichtereinheit (13), die eingerichtet ist, aus einer Versorgungsspannung eine Zwischenkreisgleichspannung zu erzeugen,
- eine Messeinheit (19), die eingerichtet ist, fortlaufend einen Istwert der Zwischenkreisgleichspannung zu messen,
- eine zweite Stromrichtereinheit (15), die eingerichtet ist, die Motorspannung durch eine Pulsweitenmodulation der Zwischenkreisgleichspannung zu erzeugen, und
- eine Steuereinheit (21),
**dadurch gekennzeichnet, dass** die Steuereinheit eingerichtet ist,
• einen vorgebbaren Toleranzbereich für eine Änderung der Zwischenkreisgleichspannung zu speichern,
• nach der ersten Messung des Istwerts den Istwert in einer Spannungsvariablen zu speichern,
• nach jeder weiteren Messung des Istwerts zu prüfen, ob eine Abweichung des Istwerts von dem in der Spannungsvariablen gespeicherten Wert innerhalb des Toleranzbereichs liegt, und den Istwert in der Spannungsvariablen zu speichern, wenn die Abweichung des Istwerts von dem in der Spannungsvariablen gespeicherten Wert außerhalb des Toleranzbereichs liegt,
• und nach jeder Speicherung eines Istwerts in der Spannungsvariablen einen von diesem Istwert abhängigen Tastgrad der Pulsweitenmodulation zu berechnen und die Pulsweitenmodulation mit diesem Tastgrad zu steuern.

10. Stromrichter (3) nach Anspruch 9, wobei die Steuereinheit (21) eingerichtet ist, eine Berechnungsanzahl von Berechnungen des Tastgrades zu erfassen.

11. Stromrichter (3) nach Anspruch 10, wobei die Steuereinheit (21) eingerichtet ist, einen vorgebbaren Schwellenwert für die Berechnungsanzahl zu speichern, die Berechnungsanzahl mit dem Schwellenwert zu vergleichen und ein Warnsignal zu erzeugen, wenn die Berechnungsanzahl den Schwellenwert erreicht.

12. Stromrichter (3) nach Anspruch 9 oder 10 mit einer Anzeigeeinheit (22), die eingerichtet ist, die Berechnungsanzahl anzuzeigen.

13. Elektrischer Schalter (1) mit einem einen Elektromotor (7) aufweisenden Schalterantrieb 5 und einem Stromrichter (3) nach einem der Ansprüche 9 bis 12 zum Erzeugen einer Motorspannung für den Elektromotor (7).

14. Elektrischer Schalter (1) nach Anspruch 13, der ein Leistungsschalter oder ein Trennschalter ist.

15. Computerprogramm, umfassend Befehle, die bei der Ausführung des Computerprogramms durch eine Steuereinheit (21) diese veranlassen, das Verfahren nach einem der Ansprüche 1 bis 8 auszuführen, mit einem Stromrichter (3) nach einem der Ansprüche 9 bis 12.

## Claims

1. Method for producing a motor voltage for an electric motor (7) of a switch drive (5) of an electrical switch (1), wherein
- a supply voltage is used to produce an intermediate-circuit DC voltage and
- the motor voltage is produced by way of a pulse-width modulation of the intermediate-circuit DC voltage,
**characterized in that**
- a tolerance range for a change in the intermediate-circuit DC voltage is predefined,
- an actual value of the intermediate-circuit DC voltage is continuously measured,
- the first measurement of the actual value is followed by storage of the actual value in a voltage variable,
- every further measurement of the actual value is followed by testing of whether a difference between the actual value and the value stored in the voltage variable is within the tolerance range, and storage of the actual value in the voltage variable if the difference between the actual value and the value stored in the voltage variable is outside the tolerance range,
- and every storage of an actual value in the voltage variable is followed by calculation of a duty cycle of the pulse width modulation that is dependent on this actual value and performance of the pulse width modulation using this duty cycle.

2. Method according to Claim 1, wherein the tolerance range is predefined symmetrically about the value stored in the voltage variable.

3. Method according to Claim 1, wherein the tolerance range is predefined asymmetrically about the value stored in the voltage variable.

4. Method according to one of the preceding claims, wherein the limits of the tolerance range are predefined by absolute values of the difference between the actual value and the value stored in the voltage variable.

5. Method according to one of Claims 1 to 4, wherein the limits of the tolerance range are predefined by relative values of the difference between the actual value and the value stored in the voltage variable.

6. Method according to one of the preceding claims, wherein a number of calculations is recorded for calculations of the duty cycle.

7. Method according to Claim 6, wherein a threshold value for the number of calculations is predefined, the number of calculations is compared with the threshold value, and a warning signal is generated if the number of calculations reaches or exceeds the threshold value.

8. Method according to Claim 6 or 7, wherein the number of calculations is displayed on a display unit (22).

9. Converter (3) for producing a motor voltage for an electric motor (7) of a drive of an electrical switch (1), the converter (3) comprising
- a first converter unit (13), configured to produce an intermediate-circuit DC voltage from a supply voltage,
- a measuring unit (19), configured to continuously measure an actual value of the intermediate-circuit DC voltage,
- a second converter unit (15), configured to produce the motor voltage by way of a pulse width modulation of the intermediate-circuit DC voltage, and
- a control unit (21),
**characterized in that** the control unit is configured
• to store a predefinable tolerance range for a change in the intermediate-circuit DC voltage,
• to store the actual value in a voltage variable after the first measurement of the actual value,
• to test, after every further measurement of the actual value, whether a difference between the actual value and the value stored in the voltage variable is within the tolerance range, and to store the actual value in the voltage variable if the difference between the actual value and the value stored in the voltage variable is outside the tolerance range,
• and to calculate, after every storage of an actual value in the voltage variable, a duty cycle of the pulse width modulation that is dependent on this actual value and to control the pulse width modulation using this duty cycle.

10. Converter (3) according to Claim 9, wherein the control unit (21) is configured to record a number of calculations for calculations of the duty cycle.

11. Converter (3) according to Claim 10, wherein the control unit (21) is configured to store a predefinable threshold value for the number of calculations, to compare the number of calculations with the threshold value and to generate a warning signal if the number of calculations reaches the threshold value.

12. Converter (3) according to Claim 9 or 10, having a display unit (22) that is configured to display the number of calculations.

13. Electrical switch (1) having a switch drive (5), which comprises an electric motor (7), and a converter (3) according to one of Claims 9 to 12 for producing a motor voltage for the electric motor (7).

14. Electrical switch (1) according to Claim 13, which is a circuit breaker or a disconnector.

15. Computer program comprising instructions that, when the computer program is executed by a control unit (21), cause said control unit to carry out the method according to one of Claims 1 to 8, using a converter (3) according to one of Claims 9 to 12.

## Revendications

1. Procédé de production d'une tension de moteur pour un moteur (7) électrique d'un entraînement (5) d'un interrupteur (1) électrique, dans lequel
- on produit une tension continue de circuit intermédiaire à partir d'une tension d'alimentation et
- on produit la tension du moteur par une modulation d'impulsion en largeur de la tension continue de circuit intermédiaire,
**caractérisé en ce que**
- on prescrit une plage de tolérance pour une variation de la tension continue de circuit intermédiaire,
- on mesure en continue une valeur réelle de la tension continue de circuit intermédiaire,
- après la mesure de la valeur réelle, on met en mémoire la valeur réelle en une variable de tension,
- après chaque autre mesure de la valeur réelle, on contrôle s'il y a, dans la plage de tolérance, un écart de la valeur réelle à la valeur mise en mémoire en la variable de tension, et on met en mémoire la valeur réelle en la variable de tension, si l'écart de la valeur réelle à la valeur mise en mémoire en la variable de tension est en dehors de la plage de tolérance,
- et après chaque mise en mémoire d'une valeur réelle en la variable de tension, on calcule un taux d'impulsion, dépendant de cette valeur réelle, de la modulation d'impulsion en largeur, et on effectue la modulation d'impulsion en largeur avec ce taux d'impulsion.

2. Procédé suivant la revendication 1, dans lequel on prescrit la plage de tolérance symétriquement autour de la valeur mise en mémoire en la variable de tension.

3. Procédé suivant la revendication 1, dans lequel on prescrit la plage de tolérance dissymétriquement autour de la valeur mise en mémoire en la variable de tension.

4. Procédé suivant l'une des revendications précédentes, dans lequel on prescrit les limites de la plage de tolérance par des valeurs absolues de l'écart de la valeur réelle à la valeur mise en mémoire en la variable de tension.

5. Procédé suivant l'une des revendications 1 à 4, dans lequel on prescrit les limites de la plage de tolérance par des valeurs relatives de l'écart de la valeur réelle à la valeur mise en mémoire en la variable de tension.

6. Procédé suivant l'une des revendications précédentes, dans lequel on détecte un nombre de calculs du taux d'impulsion.

7. Procédé suivant la revendication 6, dans lequel on prescrit une valeur de seuil du nombre de calculs, on compare le nombre de calculs à la valeur de seuil et on produit un signal d'alerte, si le nombre de calculs atteint ou dépasse la valeur de seuil.

8. Procédé suivant la revendication 6 ou 7, dans lequel on indique le nombre de calculs sur une unité (22) d'affichage.

9. Convertisseur (3) de production d'une tension de moteur pour un moteur (7) électrique d'un entraînement d'un interrupteur (1) électrique, le convertisseur (3) comprenant
- une première unité (13) de convertisseur, qui est agencée pour produire une tension d'alimentation d'une tension continue de circuit intermédiaire,
- une unité (19) de mesure, qui est agencée pour mesurer en continu une valeur réelle de la tension continue de circuit intermédiaire,
- une deuxième unité (15) de convertisseur, qui est agencée pour produire la tension de moteur par une modulation d'impulsion en largeur de la tension continue de circuit intermédiaire, et
- une unité (21) de commande,
**caractérisé en ce que** l'unité de commande est agencée,
• pour mettre en mémoire une plage de tolérance pouvant être donnée à l'avance d'une variation de la tension continue de circuit intermédiaire,
• après la première mesure de la valeur réelle, pour mettre en mémoire la valeur réelle en une variable de tension,
• après chaque autre mesure de la valeur réelle, pour contrôler s'il y a, dans la plage de tolérance, un écart de la valeur réelle à la valeur mise en mémoire en la variable de tension, et pour mettre en mémoire la valeur réelle en la variable de tension, si l'écart de la valeur réelle à la valeur mise en mémoire en la variable de tension est en dehors de la plage de tolérance,
• et après chaque mise en mémoire d'une valeur réelle en la variable de tension, calculer un taux d'impulsion, qui dépend de cette valeur réelle, de la modulation d'impulsion en largeur et commander la modulation d'impulsion en largeur par ce taux d'impulsion.

10. Convertisseur (3) suivant la revendication 9, dans lequel l'unité (21) de commande est agencée pour détecter un nombre de calculs du taux d'impulsion.

11. Convertisseur (3) suivant la revendication 10, dans lequel l'unité (21) de commande est agencée pour mettre en mémoire une valeur de seuil pouvant être donnée à l'avance du nombre de calculs, pour comparer le nombre de calculs à la valeur de seuil et pour produire un signal d'alerte, si le nombre de calculs atteint la valeur de seuil.

12. Convertisseur (3) suivant la revendication 9 ou 10, comprenant une unité (22) d'affichage, qui est agencée pour afficher le nombre de calculs.

13. Interrupteur (1) électrique comprenant un entraînement 5 d'interrupteur ayant un moteur (7) électrique et un convertisseur (3) suivant l'une des revendications 9 à 12, pour la production d'une tension de moteur pour le moteur (7) électrique.

14. Interrupteur (1) électrique suivant la revendication 13, qui est un disjoncteur ou un sectionneur.

15. Programme d'ordinateur, comprenant des instructions, qui, lors de l'exécution du programme d'ordinateur par une unité (21) de commande, font que celles-ci exécutent le procédé suivant l'une des revendications 1 à 8, comprenant un convertisseur (3) suivant l'une des revendications 9 à 12.
